# EUROPÄISCHE PATENTSCHRIFT

(11) **EP 0 894 204 B1**
(45) Veröffentlichungstag und Bekanntmachung des Hinweises auf die Patenterteilung: **17.05.2000**
(21) Anmeldenummer: 97908261.7
(22) Anmeldetag: 19.03.1997
(51) Int. Cl.: F16C 29/08

(54) **FÜHRUNGSSCHIENE FÜR EIN LINEARLAGER**
GUIDE RAIL FOR A LINEAR BEARING
RAIL DE GUIDAGE POUR PALIER LINEAIRE

(30) Priorität: 17.04.1996 DE 19615075
(43) Veröffentlichungstag der Anmeldung: 03.02.1999
(73) Patentinhaber: INA Wälzlager Schaeffler oHG, 91072 Herzogenaurach (DE)
(72) Erfinder: LAMBERTZ, Hans-Reinhard, D-40699 Erkrath (DE); NOTTEBAUM, Klaus, D-40723 Hilden (DE); LEBER, Ulrich, D-40231 Düsseldorf (DE); WELSCH, Annette, D-66424 Homburg (DE)
(86) Internationale Anmeldenummer: EP9701371
(87) Internationale Veröffentlichungsnummer: WO9739252

(56) Entgegenhaltungen:
- EP-A- 0 311 895
- DD-A- 237 805
- DE-A- 3 046 590
- DE-B- 1 085 586
- DE-C- 4 311 641
- DE-U- 9 316 349
- DE-U- 9 320 135
- DE-U- 9 408 850
- US-A- 1 941 175

## Beschreibung

### Gebiet der Erfindung

Die Erfindung betrifft eine Führungsschiene für ein Linearlager mit mehreren in Schienenlängsrichtung in Abständen hintereinander angeordneten, von der Schienenoberseite ausgehenden Durchgangsöffnungen für die Aufnahme von Befestigungselementen, mit einer zur Schienenoberseite offenen, sich über die gesamte Länge der Führungsschiene erstreckenden Längsnut und mit einem in der Längsnut eingesetzten und befestigten, die Durchgangsöffnungen nach außen verschließenden Abdeckband.

### Hintergrund der Erfindung

Führungsschienen werden an Werkzeugmaschinen verwendet und müssen als Verschleißteile von Zeit zu Zeit ausgewechselt werden. Daher sind sie häufig mit Schrauben am Maschinengestell befestigt. Zum Verschließen der radial erweiterten Endabschnitte der Bohrungen für die Schraubenköpfe ist es bekannt, in jeden Endabschnitt einen Stopfen oder eine Kappe einzusetzen, wie es beispielsweise die DE 30 46 590 A und das DE 93 16 349 U zeigen. Die Verwendung von Kappen hat den Nachteil zu geringer mechanischer Haltekräfte. Außerdem ist hierfür eine aufwendige Montage erforderlich, da jede Kappe einzeln eingesetzt werden muß.

Es ist auch möglich, die Führungsschiene in der Fluchtungslinie der Befestigungsbohrungen mit einer nutförmigen Aussparung zu versehen, in welche eine Abdeckleiste passend eingesetzt wird. Eine solche Anordnung zeigt beispielsweise die DD 237 805 A. Dort kann die Abdeckleiste mit geringem Übermaß gefertigt werden und auf dem Nutgrund aufliegend durch Pressen, Schrumpfen und/oder Kleben gefügt werden.

Dabei besteht aber die Gefahr, daß sich die Klebung bzw. die Abdeckleiste löst.

Aus der DE 43 11 641 C ist eine Linearbewegungsführung bekannt, bei der ein aus federndem Bandmaterial gebildetes Abdeckband auf die Führungsschiene aufgesteckt wird, wobei nach innen abgebogene Randbereiche des Bandes in Hinterschneidungen der Führungsschiene eingreifen. Die Hinterschneidungen befinden sich an den beiden parallelen Längsseiten der Führungsschiene, während die gesamte Oberseite der Führungsschiene mit dem Abdeckband bedeckt ist. Diese Ausbildung hat den Nachteil, daß die Befestigung des Abdeckbandes an der Führungsschiene sehr labil ist und daß das Abdeckband außerdem eine Breite haben muß, die der gesamten Führungsschienenbreite entspricht. Außerdem ist eine Lagerung des Abdeckbandes nur in gestrecktem Zustand oder in der Form einer Rolle mit sehr großem Durchmesser möglich, da sonst ein Ausknicken der gebogenen Randbreiche zu einer Beeinträchtigung der Haltefunktion führt. Da das Band nur in sehr großem Durchmesser gerollt werden kann, gestaltet sich sein Transport schwierig. Es ist auch nur die Verwendung von dünnen Blechen möglich, da diese über die Schienenseitenflächen geführt werden müssen und dort wenig Platz zur Verfügung steht. Dadurch ergeben sich nur geringe Haltekräfte. Das Band läßt sich über den Durchgangsöffnungen eindrücken und ein leichtes Ablösen des Bandes ist auch in der Schienenmitte möglich. Bei auf die Führungsschiene aufgeschobenem Führungswagen läßt sich Abdeckband nur unter großem Aufwand und unter Verringerung der Klemmkräfte an der Führungsschiene montieren.

Aus der EP 0 311 895 A ist eine Führungsschiene der eingangs genannten Art bekannt. Hier braucht die Längsnut an der Schienenoberseite nur so breit zu sein, daß das eingesetzte Abdeckband die Durchgangsöffnungen der Führungsschiene, die in Schienenlängsrichtung in Abständen hintereinander angeordnet sind, sicher verschließt. Das Abdeckband ist am Grund der Längsnut zwischen jeweils zwei benachbarten Durchgangsöffnungen auf der Führungsschiene aufgeklebt. Dadurch entsteht eine stabile Anordnung des Abdeckbandes, jedoch läßt dieses sich nicht ohne weiteres von der Führungsschiene wieder ablösen.

Wenn unter hoher Kraftaufwendung eine Ablösung durchgeführt worden ist, müssen sowohl das Abdeckband als auch die Führungsschiene von dem Kleber befreit, beispielsweise abgeschliffen werden.

### Zusammenfassung der Erfindung

Der Erfindung liegt die Aufgabe zugrunde, eine fest sitzende Abdeckung für die Durchgangsöffnungen einer gattungsgemäße Führungsschiene zu schaffen, die einfach zu montieren und zu demontieren ist.

Diese Aufgabe wird erfindungsgemäß dadurch gelöst, daß das Abdeckband ein größeres Breitenmaß als die Längsnut der Führungsschiene aufweist und unter Auswölbung zur Führungsschiene hin in die Längsnut eingedrückt ist. Durch seine Rückfederungskraft krallt sich das Abdeckband in die Seitenflächen der Längsnut, so daß das Band in der Nut gehalten wird. Dadurch, daß das Band vor der Montage eben ist, läßt es sich platzsparend als Rolle aufwickeln, so daß sehr große Längen des Abdeckbandes kostengünstig herstellbar und transportierbar sind. Das Abdeckband erfordert keine aufwendige Bearbeitung, Biegevorgänge sind nicht erforderlich, was einen Kostenvorteil bedeutet. Die Bandbreite des Abdeckbandes kann in engen Toleranzen gehalten werden. Durch geeignete Hilfsmittel kann das Montieren des Bandes automatisiert werden, z. B. kann es in die Längsnut der Führungsschiene mit Hilfe einer Rolle eingedrückt werden, die auf der Schienenoberseite abrollt und mit einem Magazin mit aufgerolltem Band verbunden ist. Eine Demontage des Abdeckbandes ist ohne dessen Beschädigung möglich. Sie beginnt an den Schienenenden, so daß ein unbeabsichtigtes Ablösen des Bandes im Funktionsbereich der Führungsschiene nicht auftreten kann. Das Abdeckband läßt sich auch auf einer Führungsschiene mit aufgeschobenem Führungswagen montieren, indem das ebene Band zwischen Wagenrücken und Schienenoberseite durch den Wagen geschoben wird. Beim Eindrücken des Bandes in die Nut wird der Wagen dann partiell verschoben.

Die Längsnut der Führungsschiene kann im Querschnitt rechteckig ausgebildet sein. Es ist aber auch möglich, diese Nut mit einem Absatz zu versehen, so daß die Eindrücktiefe des Bandes in engen Grenzen gehalten wird. Schließlich kann die Längsnut im Querschnitt auch schwalbenschwanzförmig sein. Durch den dabei entstehenden Hinterschnitt erhöht sich die Haltekraft für das Abdeckband. Die Längsnut der Führungsschiene kann also mit unterschiedlichen Querschnitten ausgeführt sein. Für eine Walzbearbeitung optimal kann auch eine Nut mit konkavem Querschnitt sein, die gleichzeitig die Eindrücktiefe des Bandes begrenzt.

Das Abdeckband kann beispielsweise ein federndes Stahlblech sein und eine Korrosionsschutzschicht aufweisen. An seiner der Führungsschiene zugewandten Unterseite und/oder an seinen Rändern kann das Abdeckband mit einer Gummierung beschichtet sein zur Verhinderung kapillarer Unterwanderungen. Diese Gummierung kann auch als zusätzliche Federung dienen, um die Rückfederung des Bandmaterials zu verstärken. Damit entsteht eine Abdichtung zwischen den Seitenwänden der Längsnut und dem Abdeckband, die es ermöglicht, die Führungsschiene mit dem Abdeckband auch in aggressiven Medien einzusetzen.

Die Durchgangsöffnungen der Führungsschiene können für die Aufnahme von Schrauben dienen und sie können beispielsweise als Stufenbohrungen ausgeführt sein, so daß eine gute Unterbringung der Schraubenschäfte und der Schraubenköpfe in der Führungsschiene gewährleistet ist. Die erfindungsgemäße Führungsschiene weist ein hohes Automatisierungspotential und sehr gute Transportmöglichkeiten auf.

### Kurze Beschreibung der Zeichnungen

Ausführungsbeispiele der Erfindung sind in den Zeichnungen dargestellt und werden im folgenden näher beschrieben. Es zeigen
- Figur 1: eine perspektivische Ansicht einer Führungsschiene, deren Längsnut im Querschnitt rechteckig ausgebildet ist, mit einer im Bereich einer Durchgangsöffnung geschnittenen Stirnseite;
- Figur 2: einen vergrößerten Ausschnitt der Stirnseite gemäß Einkreisung II der Figur 1;
- Figur 3: einen Querschnitt durch eine Führungsschiene mit einer Längsnut, welche einen Absatz aufweist;
- Figur 4: einen Querschnitt durch eine Führungsschiene mit einer schwalbenschwanzförmigen Längsnut;
- Figur 5: einen Querschnitt durch eine Führungsschiene mit einer Längsnut mit konkaver Grundfläche.

### Ausführliche Beschreibung der Zeichnung

Ein Abdeckband 1, welches aus einem federndem Bandmaterial, beispielsweise einem Stahlblech besteht, ist in einer Längsnut 2 einer Führungsschiene 5 eingesetzt. Bei dem Bandmaterial kann der federnde Kraftmechanismus durch materialeigene Biegefederung oder externe Federung, z.B. durch Auftragen einer Gummierung zustande kommen. Die Längsnut 2 geht von der Schienenoberseite 3 aus und hat eine etwas geringere Breite als das Abdeckband 1. Dieses mußte sich daher, als es in die Längsnut 2 eingedrückt wurde, zur Führungsschiene 5 hin auswölben. Mit dem Abdeckband 1, das sich in der Längsnut 2 befindet, werden mehrere in Längsrichtung der Führungsschiene 5 in Abständen hintereinander angeordnete senkrechte Durchgangsöffnungen 4 verschlossen. In den Ausführungsbeispielen sind diese Öffnungen als Stufenbohrungen zur Aufnahme von Befestigungsschrauben ausgebildet.

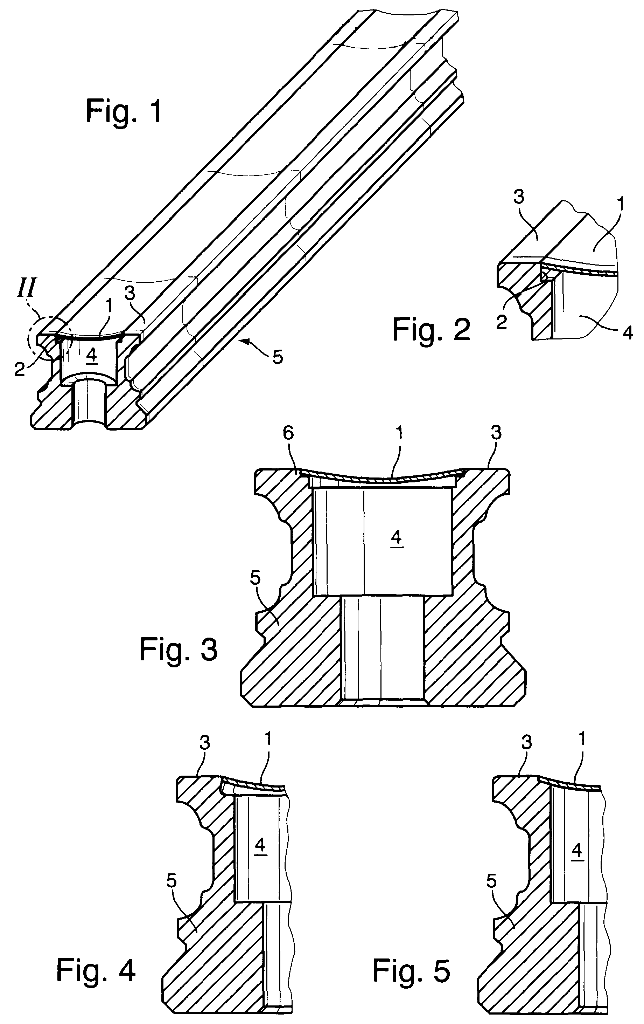

Infolge seiner Auswölbung tritt in dem Abdeckband 1 eine Rückfederungskraft auf, die auf die Seitenflächen der Längsnut 2 einwirkt. Auf diese Weise wird das Abdeckband 1 in der Längsnut 2 der Führungsschiene 5 gehalten. In den Figuren 1 und 2 ist die Längsnut 2 im Querschnitt rechteckig ausgeführt. Die Längsnut in Figur 3 weist einen Absatz 6 auf, so daß die Eindrücktiefe des Abdeckbandes 1 in engen Grenzen gehalten wird. Figur 4 zeigt eine Längsnut mit schwalbenschwanzförmigem Querschnitt, so daß die Haltekraft durch den entstandenen Hinterschnitt erhöht wird. In Figur 5 ist die Längsnut am Nutgrund konkav ausgebildet, so daß sich eine der Wölbung des Abdeckbandes 1 entsprechende Anlagefläche für das Abdeckband ergibt.

### Bezugszahlenliste

- 1: Abdeckband
- 2: Längsnut
- 3: Schienenoberseite
- 4: Durchgangsöffnung
- 5: Führungsschiene
- 6: Absatz

## Patentansprüche

1. Führungsschiene (5) für ein Linearlager mit mehreren in Schienenlängsrichtung in Abständen hintereinander angeordneten, von der Schienenoberseite ausgehenden Durchgangsöffnungen (4) für die Aufnahme von Befestigungselementen, mit einer zur Schienenoberseite offenen, sich über die gesamte Länge der Führungsschiene (5) erstreckenden Längsnut (2) und mit einem in der Längsnut (2) eingesetzten und befestigten, die Durchgangsöffnungen (4) nach außen verschließenden Abdeckband (1), **dadurch gekennzeichnet**, daß das Abdeckband (1) ein größeres Breitenmaß als die Längsnut (2) der Führungsschiene (5) aufweist und unter Auswölbung zur Führungsschiene (5) hin in die Längsnut (2) eingedrückt ist.

2. Führungsschiene nach Anspruch 1, **dadurch gekennzeichnet,** daß die Längsnut (2) im Querschnitt rechteckig ausgebildet ist.

3. Führungsschiene nach Anspruch 1, **dadurch gekennzeichnet,** daß das Abdeckband (1) ein biegefederndes Bandmaterial ist.

4. Führungsschiene nach Anspruch 3, **dadurch gekennzeichnet,** daß das Abdeckband (1) eine Korrosionsschutzschicht aufweist.

5. Führungsschiene nach Anspruch 3, **dadurch gekennzeichnet,** daß das Abdeckband (1) an seiner der Führungsschiene (5) zugewandten Unterseite und/oder an seinen Rändern mit einer Gummierung beschichtet ist.

6. Führungsschiene nach Anspruch 1, **dadurch gekennzeichnet,** daß die Durchgangsöffnungen (4) der Führungsschiene (5) als Stufenbohrungen ausgeführt sind.

7. Führungsschiene nach Anspruch 1, **dadurch gekennzeichnet**, daß die Durchgangsöffnungen der Führungsschiene (5) für die Aufnahme von Schrauben dienen.

8. Führungsschiene nach Anspruch 1, **dadurch gekennzeichnet,** daß die Längsnut im Querschnitt mit einem Absatz (6) ausgeführt ist.

9. Führungsschiene nach Anspruch 1, **dadurch gekennzeichnet**, daß die Längsnut im Querschnitt schwalbenschwanzförmig ausgebildet ist.

10. Führungsschiene nach Anspruch 1, **dadurch gekennzeichnet,** daß die Längsnut im Querschnitt einen konkaven Nutgrund aufweist.

## Claims

1. Guide rail (5) for a linear bearing comprising several through-openings (4) arranged spaced apart one behind the other in the longitudinal direction of the guide rail and starting from the top surface of the guide rail for receiving fixing elements, said guide rail further comprising a longitudinal groove (2) which is open towards the top surface of the guide rail and extends over the entire length of the guide rail (5), a cover strip (1) being inserted into and fixed in the longitudinal groove (2) to seal the through-openings (4) from the outside, **characterised in that** the cover strip (1) has a larger width than the longitudinal groove (2) of the guide rail (5) and is pressed into the longitudinal groove (2) by arching towards the guide rail (5).

2. Guide rail according to Claim 1, **characterised in that** the longitudinal groove (2) has a rectangular cross-section.

3. Guide rail according to Claim 1, **characterised in that** the cover strip (1) is made of a flexible strip material.

4. Guide rail according to Claim 3, **characterised in that** the cover strip (1) has an anti-corrosive coating.

5. Guide rail according to Claim 3, **characterised in that** the cover strip (1) comprises a rubber coating on its undersurface facing the guide rail (1) and/or on its edges.

6. Guide rail according to Claim 1, **characterised in that** the through-openings (4) of the guide rail (5) are configured as stepped bores.

7. Guide rail according to Claim 1, **characterised in that** the through-openings of the guide rail (5) serve to receive screws.

8. Guide rail according to Claim 1, **characterised in that**, as viewed in cross-section, the longitudinal groove has a shoulder (6).

9. Guide rail according to Claim 1, **characterised in that**, as viewed in cross-section, the longitudinal groove has a dovetail configuration.

10. Guide rail according to Claim 1, **characterised in that**, as viewed in cross-section, the longitudinal groove has a concave groove bottom.

## Revendications

1. Rail de guidage (5) pour un roulement linéaire, ledit rail de guidage comprenant plusieurs ouvertures de passage (4) agencées à distance l'une derrière l'autre dans la direction longitudinale du rail et qui s'étendent à partir de la surface supérieure du rail pour recevoir des éléments de fixation, ledit rail comprenant, en outre, une rainure longitudinale (2) qui est ouverte vers la surface supérieure du rail et s'étend sur la longueur entière du rail de guidage (5), et un feuillard de recouvrement (1) qui est inséré et fixé dans la rainure longitudinale (2) et ferme les ouvertures de passage (4) vers l'extérieur, caractérisé en ce que le feuillard de recouvrement (1) a une largeur supérieure à celle de la rainure longitudinale (2) et qu'il se serre dans la rainure longitudinale (2) en se voûtant vers le rail de guidage (5).

2. Rail de guidage selon la revendication 1, caractérisé en ce que la rainure longitudinale (2) a une section droite rectangulaire.

3. Rail de guidage selon la revendication 1, caractérisé en ce que le feuillard de recouvrement (1) est fait en un matériau élastique.

4. Rail de guidage selon la revendication 3, caractérisé en ce que le feuillard de recouvrement (1) comprend une couche anticorrosive.

5. Rail de guidage selon la revendication 3, caractérisé en ce que le feuillard de recouvrement (1) est muni à sa surface inférieure tournée vers le rail de guidage (5) et/ou à ses bords, d'une couche de caoutchouc.

6. Rail de guidage selon la revendication 1, caractérisé en ce que les ouvertures de passage (4) du rail de guidage (5) sont configurées en forme d'alésages étagés.

7. Rail de guidage selon la revendication 1, caractérisé en ce que les ouvertures de passage du rail de guidage (5) servent à recevoir des vis.

8. Rail de guidage selon la revendication 1, caractérisé en ce que, la rainure longitudinale a une section droite comprenant un épaulement (6).

9. Rail de guidage selon la revendication 1, caractérisé en ce que la rainure longitudinale a une section droite en queue d'aronde.

10. Rail de guidage selon la revendication 1, caractérisé en ce que la rainure longitudinale comprend en section droite, un fond de rainure concave.
